# EUROPEAN PATENT APPLICATION

(11) **EP 2 584 578 A2**
(43) Date of publication of application: **24.04.2013**
(21) Application number: 12188626.1
(22) Date of filing: 16.10.2012
(51) Int. Cl.: H01H 13/02, H04N 5/64

(54) **Display device and television**

(30) Priority: 17.10.2011 JP 2011228299
(71) Applicant: Funai Electric Co., Ltd., Daito-shi Osaka 574-0013 (JP)
(72) Inventor: Fukumoto, Yasuyuki, Daito-shi, Osaka 574-0013 (JP); Ohara, Hisayuki, Daito-shi, Osaka 574-0013 (JP); Miyajima, Kazutoshi, Daito-shi, Osaka 574-0013 (JP)
(74) Representative: Grünecker, Kinkeldey, Stockmair & Schwanhäusser

(57) **Abstract**

A display device (1) includes a frame-shaped front cabinet (11) that includes a light-guiding hole (212) to guide light from a light source to outside, a display (62) including a display region that is disposed so as to be exposed from the frame-shaped front cabinet, an operating board attached to an inner surface of the front cabinet and that includes a ground pattern on the surface thereof on a side of the inner surface of the front cabinet, and an LED as the light source that is attached to the operating board and that is disposed at a position farther behind the ground pattern on the operating board as seen from the front.

## Description

### BACKGROUND OF THE INVENTION

### 1. Field of the Invention

The present invention relates to a display device and a television, and more particularly to a display device and a television in which a light source is provided.

### 2. Description of the Related Art

Push-button switches in which a light source is provided have been known in the past. See, for example, Japanese Patent Application Laid-Open Publication No. 2007-141503.

Japanese Patent Application Laid-Open Publication No. 2007-141503 discloses a push-button switch including a circuit board (board) that is attached to the inner surface of a key top main body and that has a second ground board (ground pattern) on the surface thereof on the side of the inner surface of the key top main body and a light-emitting element as a light source that is attached to the circuit board and that is disposed so as to protrude forward (toward the key top main body) from the second ground board of the circuit board. In this push-button switch, by providing a ground plate made of metal used as a countermeasure against static electricity which is formed so as to extend to the front of the light-emitting element and by attaching the ground plate to the second ground board, static electricity intruding from the front side is dropped onto the ground plate that extends to the front of the light-emitting element and diverted to the second ground board (ground pattern), thus inhibiting the static electricity from reaching the light-emitting element used as the light source.

However, because the push-button switch of Japanese Patent Application Laid-Open Publication No. 2007-141503 inhibits static electricity from reaching the light-emitting element by dropping the static electricity intruding from the front side onto the ground plate that extends to the front of the light-emitting element, there is the inconvenience of having to provide a ground plate exclusively as a countermeasure against static electricity, separately from the circuit board that has the ground pattern. Therefore, when the push-button switch described in Japanese Patent Application Laid-Open Publication No. 2007-141503 is applied to a display device, there is a problem in that it is necessary to provide a ground plate exclusively as a countermeasure against static electricity, separately from the circuit board that has the ground pattern in order to inhibit static electricity from reaching the light-emitting element used as the light source.

### SUMMARY OF THE INVENTION

Accordingly, preferred embodiments of the present invention provide a display device and a television that prevent static electricity from reaching a light-emitting element used as the light source without providing any member exclusively as a countermeasure against static electricity, separately from a circuit board that includes a ground pattern.

A display device according to a first preferred embodiment of the present invention includes a frame-shaped front case that includes a light-guiding hole arranged to guide light from the light source to the outside, a display including a display region that is exposed from the frame-shaped front case, a board that is attached to the inner surface of the front case and that includes a ground pattern on the surface thereof on the side of the inner surface of the front case, and a light-emitting element as the light source that is attached to the board and that is disposed at a position farther behind the ground pattern of the board as seen from the front.

In this display device according to the first preferred embodiment of the present, as was described above, by providing a light-emitting element as the light source that is attached to the board and that is disposed at a position farther behind the ground pattern of the board as seen from the front, the static electricity intruding into the interior of the display device from the light-guiding hole of the front case can be dropped (removed) directly onto the ground pattern provided in front of the light-emitting element before reaching the light-emitting element. Consequently, it is possible to prevent static electricity from reaching the light-emitting element used as the light source without providing any member exclusively as a countermeasure against static electricity, other than the board which has a ground pattern.

In the display device according to the first preferred embodiment of the present, the ground pattern is preferably arranged on the surface of the board so as to be exposed to the interior of the light-guiding hole of the front case as seen from the front. If such a configuration is adopted, static electricity intruding via the light-guiding hole can easily be dropped (removed) directly onto the ground pattern.

In this case, the ground pattern exposed to the interior of the light-guiding hole of the front case is preferably provided on the surface of the board so as to surround the circumference of the light-emitting element as seen from the front. With such a configuration, even if static electricity should intrude from any direction around the light-emitting element, the static electricity can be removed by the ground pattern being arranged to surround the circumference of the light-emitting element, so it is possible to effectively prevent the static electricity from reaching the light-emitting element used as the light source.

In the display device according to the first preferred embodiment of the present invention, the board is preferably attached to the front case such that the ground pattern on the board is in contact with the opening edge portion of the light-guiding hole in the front case toward the board without any space. If such a configuration is adopted, static electricity can be prevented from intruding into the interior of the display device from the space between the ground pattern on the board and the board-side opening edge portion of the light-guiding hole in the front case, so it is possible to more effectively prevent the static electricity from reaching the light-emitting element.

In the display device according to the first preferred embodiment of the present invention, it is preferable that the board include a light-emitting element installation hole where the light-emitting element is disposed, that the ground pattern be provided on the surface of the board in the vicinity of the opening edge portion of the light-emitting element installation hole in a circumferential configuration along the opening edge portion of the light-emitting element installation hole, and that the light-emitting element be disposed in the interior of the light-emitting element installation hole of the board and in a position farther behind the ground pattern on the board as seen from the front. With such a configuration, the light-emitting element can be disposed easily in a position farther behind the ground pattern merely by disposing the light-emitting element in the interior of the light-emitting element installation hole that is provided with the ground pattern in a circumferential configuration along the opening edge portion.

In this case, it is preferable that the opening edge portion of the light-emitting element installation hole toward the front case be provided on the inside of the opening edge portion of the light-guiding hole toward the board as seen from the front, and that the ground pattern be provided on the surface of the board in a region between the opening edge portion of the light-emitting element installation hole toward the front case and the opening edge portion of the light-guiding hole toward the board. If such a configuration is adopted, the ground pattern preferably having a circumferential configuration along the opening edge portion of the light-emitting element installation hole of the board can be formed easily in an exposed manner by utilizing the difference in the size of the opening edge portions between the opening edge portion of the light-guiding hole toward the board and the opening edge portion of the light-emitting element installation hole toward the front case.

In a configuration in which the board includes the light-emitting element installation hole, it is preferable that the light-emitting element include a light-emitting element main body and a board attachment member, and that the board attachment member of the light-emitting element be attached to the surface of the board on the side opposite from the front case in a state in which the light-emitting element main body is disposed in the light-emitting element installation hole. With such a configuration, the light-emitting element can be disposed easily in the interior of the light-emitting element installation hole in the board and in a position farther behind the ground pattern on the board merely by attaching the board attachment member of the light-emitting element to the surface of the board on the side opposite from the front case.

In the display device according to the first preferred embodiment of the present invention, it is preferable that the light-guiding hole in the front case have a substantially circular truncated cone shape, that the smaller opening edge portion of the substantially circular truncated cone-shaped light-guiding hole contact the board, and that the ground pattern on the board be exposed on the inside of the smaller opening edge portion of the substantially circular truncated cone-shaped light-guiding hole. If such a configuration is adopted, the light-guiding hole which becomes a static electricity intrusion path becomes gradually smaller along the direction of intrusion of the static electricity, so it is possible to narrow down the region reached by the static electricity. As a result, the static electricity can be removed efficiently even with a small ground pattern.

In the display device according to the first preferred embodiment of the present invention, it is preferable that the front case include a panel including a panel hole that has an opening edge portion with a smaller inner diameter than the opening edge portion of the light-guiding hole in the front case toward the outer surface thereof, and that the panel be attached to the front side of the front case such that the panel hole overlaps with the light-guiding hole in the front case. With such a configuration, even in cases where the panel is attached to the front side of the front case in a positionally shifted state, the panel hole and the light-guiding hole tend to be disposed in mutually overlapping positions, so light can be emitted to the outside easily via the panel hole.

In the display device according to the first preferred embodiment of the present invention, it is preferable that a rear frame made of metal be provided on the rear side of the display, and that the ground pattern be electrically connected to the rear frame. If such a configuration is adopted, the static electricity dropped onto the ground pattern on the board is diverted to the rear frame that has a large surface area, thus making it possible to prevent the static electricity from remaining on the board.

In the display device according to the first preferred embodiment of the present invention, it is preferable that a plurality of capacitance switches be provided in the vicinity of the light-emitting element disposed on the board, and that the light-guiding hole be provided in a position of the front case from which the light-emitting element and the ground pattern are exposed and from which the capacitance switches are not exposed as seen from the front. With such a configuration, even in cases where the capacitance switches are provided in the vicinity of the light-emitting element disposed on the board, static electricity intruding via the light-guiding hole is dropped onto the ground pattern, so it is possible to prevent the static electricity from directly reaching the capacitance switches. Thus, with preferred embodiments of the present invention, it is possible to prevent the static electricity from reaching the light-emitting element and the capacitance switches without providing a ground plate or the like as a countermeasure against static electricity in front of the board, so the capacitance switches can be in direct contact with the inner surface of the front case. As a result, the capacitance switches can be operated properly.

The television according to a second preferred embodiment of the present invention includes a receiver capable of receiving a television broadcast, a frame-shaped front case that includes a light-guiding hole to guide light from the light source to the outside, a display device including a display region that is disposed so as to be exposed from the frame-shaped front case, a board that is attached to the inner surface of the front case and that includes a ground pattern on the surface thereof on the side of the inner surface of the front case, and a light-emitting element as the light source that is attached to the board and that is disposed at a position farther behind the ground pattern of the board as seen from the front.

In the television according to the second preferred embodiment of the present invention, as was described above, by providing the light-emitting element as the light source that is attached to the board and that is disposed at a position farther behind the ground pattern of the board as seen from the front, static electricity intruding into the interior of the display device from the light-guiding hole in the front case can be directly dropped onto the ground pattern provided in front of the light-emitting element before reaching the light-emitting element. This makes it possible to prevent the static electricity from reaching the light-emitting element used as the light source without providing any member exclusively as a countermeasure against static electricity, separately from the board that has a ground pattern.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a diagram of the television according to a preferred embodiment of the present invention as seen from the front.

FIG. 2 is an exploded perspective view showing the overall configuration of the television according to a preferred embodiment of the present invention.

FIG. 3 is an enlarged diagram of the lower portion on the rear side of the front cabinet of the television according to a preferred embodiment of the present invention.

FIG. 4 is a diagram showing the panel of the television according to a preferred embodiment of the present invention.

FIG. 5 is a diagram showing the operating board of the television according to a preferred embodiment of the present invention.

FIG. 6 is a diagram for illustrating the path for diverting static electricity in the television according to a preferred embodiment of the present invention.

FIG. 7 is a diagram showing the front cabinet side of the board fixing member of the television according to a preferred embodiment of the present invention.

FIG. 8 is a diagram showing the opposite side of the front cabinet side of the board fixing member of the television according to a preferred embodiment of the present invention.

FIG. 9 is a diagram in a state in which the operating board is attached to the front cabinet of the television according to a preferred embodiment of the present invention.

FIG. 10 is a diagram in a state in which the operating board and the board fixing member are attached to the front cabinet of the television according to a preferred embodiment of the present invention.

FIG. 11 is a diagram of a LED exposing hole or light guiding hole in the front cabinet of the television according to a preferred embodiment of the present invention as seen from the front of the television.

FIG. 12 is a sectional view along line 100-100 in FIG. 10.

FIG. 13 is a sectional view along line 200-200 in FIG. 10.

### DETAILED DESCRIPTION OF THE PREFERRED EMBODIMENTS

Preferred embodiments of the present invention will be described below with reference to the figures.

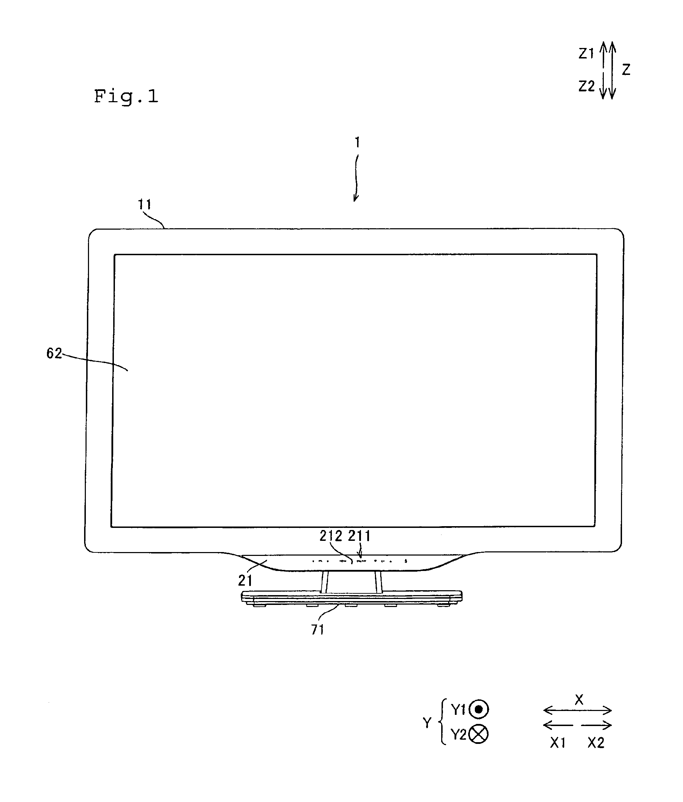

The configuration of the television 1 according to a preferred embodiment of the present invention will be described with reference to FIGs. 1 through 13. Note that the television 1 is one example of a "display device" according to various preferred embodiments of the present invention.

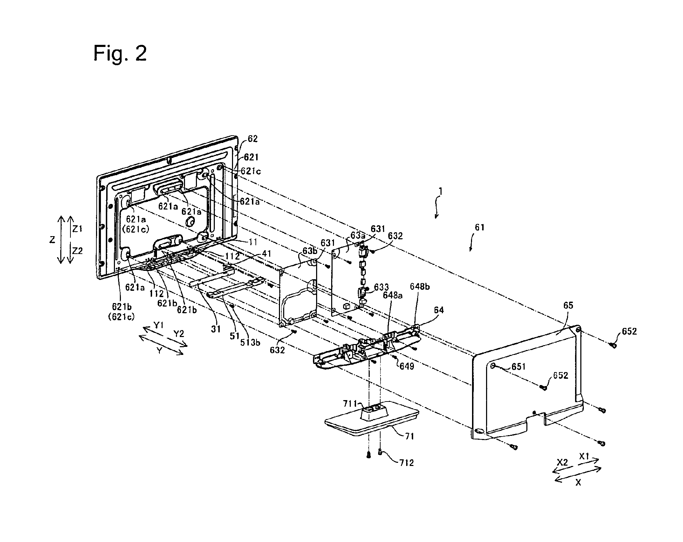

The television 1 according to a preferred embodiment of the present invention includes a front cabinet 11 on the front side (Y1 direction side) of the television 1 as shown in FIG. 1. Furthermore, a panel 21 is attached to the front side of the front cabinet 11. Moreover, an operating board 31, a metal plate 41 attached to the operating board 31, and a board fixing member 51 are attached to the lower portion on the rear side (Y2 direction side) of the front cabinet 11 as shown in FIG. 2. In addition, a display device main body 61 is provided on the rear side of the front cabinet 11. The display device main body 61 includes a display 62 including a display region that is disposed so as to be exposed from the front cabinet 11, circuit boards 63a and 63b, and a stand attachment member 64. Furthermore, a cover member 65 is attached to the rear side of the display device main body 61. Moreover, a stand member 71 is attached to the stand attachment member 64 of the television 1 from the lower side (Z2 direction side). Note that the front cabinet 11 is one example of a "front case" according to a preferred embodiment of the present invention. In addition, the operating board 31 is one example of a "board" according to a preferred embodiment of the present invention.

As is shown in FIG. 1, the front cabinet 11 preferably has a substantially rectangular shape (horizontally elongated rectangular shape) having the shape of a frame as viewed from the front surface. Furthermore, the front cabinet 11 is preferably formed from a resin such as polystyrene. The front cabinet 11 is configured such that the panel 21 can be attached to the lower portion thereof.

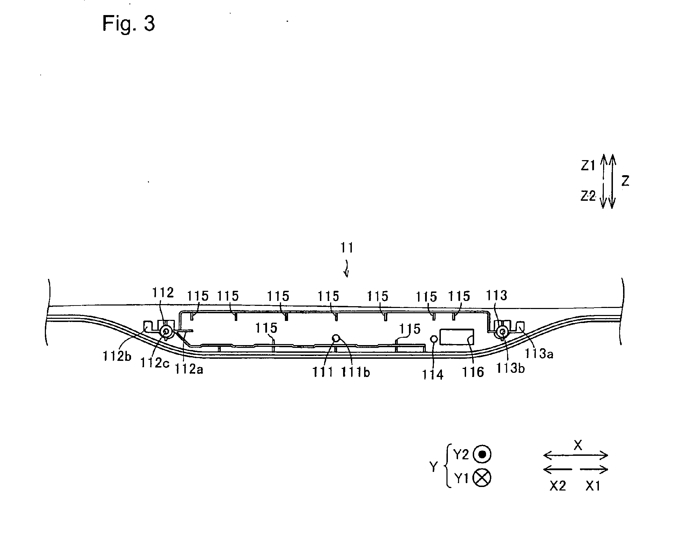

Here, in the present preferred embodiment, as is shown in FIG. 3, the front cabinet 11 is provided with a light-guiding hole 111 that guides light irradiated from an LED 312 (described later) to the outside of the television 1 and a light-intake hole 116 that takes light into an illuminance sensor 313 and an IR light-receiver 314 (described later). Moreover, two attachment members 112 and 113 that fix the board fixing member 51 to the front cabinet 11, a boss 114 that has the function of positioning the metal plate 41 (see FIG. 2) attached to the operating board 31, and a plurality of positioning members 115 that position the operating board 31 are provided on the inside (rear side) of the front cabinet 11.

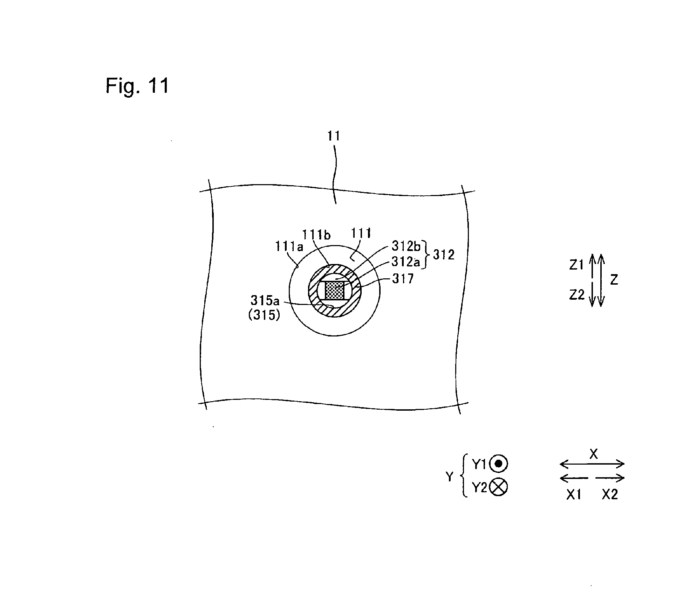

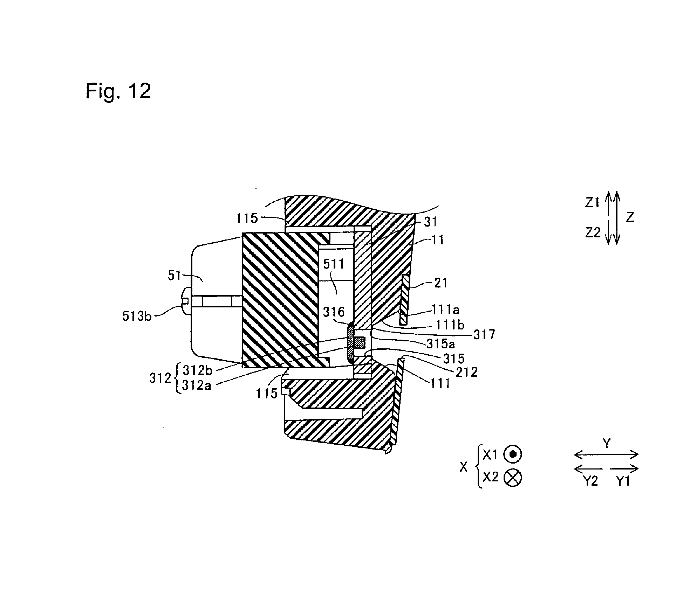

The light-guiding hole 111 is preferably provided substantially in the center in the X direction of the lower portion of the front cabinet 11. In addition, the light-guiding hole 111 is provided in a position that allows the LED 312 to be exposed and does not allow capacitance switches 311 to be exposed (see FIG. 11). Furthermore, the light-guiding hole 111 preferably has a substantially circular truncated cone shape (see FIG. 12). The light-guiding hole 111 in the front cabinet 11 is provided between the two attachment members 112 and 113. Moreover, an opening edge portion 111a (see FIG. 11) which is the larger of the edge portions of the substantially circular truncated cone-shaped light-guiding hole 111 is provided on the front side (Y1 direction side) of the front cabinet 11, while an opening edge portion 111b which is the smaller of the edge portions of the substantially circular truncated cone-shaped light-guiding hole 111 is provided on the rear side (Y2 direction side) of the front cabinet 11. In addition, the opening edge portion 111b of the light-guiding hole 111 is configured so as to contact a ground pattern 317 (see FIG. 12) on the operating board 31 without any space and also configured such that the ground pattern 317 is exposed on the inside of the opening edge portion 111b of the light-guiding hole 111 as shown in FIGs. 11 and 12.

Furthermore, the two attachment members 112 and 113 are provided in the lower portion on the inside (Y2 direction side) of the front cabinet 11 in the vicinity of the center thereof as shown in FIG. 3. The two attachment members 112 and 113 are disposed with a specified space from each other. Moreover, the attachment member 112 on the X2 direction side is provided with a positioning member 112a which positions the operating board 31 with respect to the left-right direction (X direction) of the front cabinet 11, a hook engaging member 112b with which the corresponding hook 512 of the board fixing member 51 is engaged, and a screw hole 112c to fix the board fixing member 51 to the attachment member 112 preferably via a screw 513b (see FIG. 2). In addition, the positioning member 112a is arranged such that the two attachment members 112 and 113 protrude in mutually facing directions. Furthermore, the positioning member 112a preferably includes a rectilinear rib that extends in the Y direction. Moreover, the attachment member 113 on the X1 direction side is provided with a hook engaging member 113a with which the corresponding hook 512 of the board fixing member 51 is engaged and a screw hole 113b to fix the board fixing member 51 to the attachment member 113 preferably via a screw 513b.

In addition, the hook engaging members 112b and 113a are provided in positions that are respectively located outside of the screw hole 112c of the attachment member 112 and the screw hole 113b of the attachment member 113 in the X direction as shown in FIG. 3. Furthermore, the hook engaging members 112b and 113a preferably have a shape that engages with the hooks 512 of the board fixing member 51.

The panel 21 is attached to the lower portion on the front side (Y1 direction side) of the front cabinet 11 as shown in FIG. 1. Moreover, the panel 21 is configured so as to be able to transmit light. Operating members 211 pertaining to the volume (down), volume (up), menu, source, channel (down), channel (up), and power corresponding to the plurality of capacitance switches 311 are provided on the front side (Y1 direction side) of the panel 21.

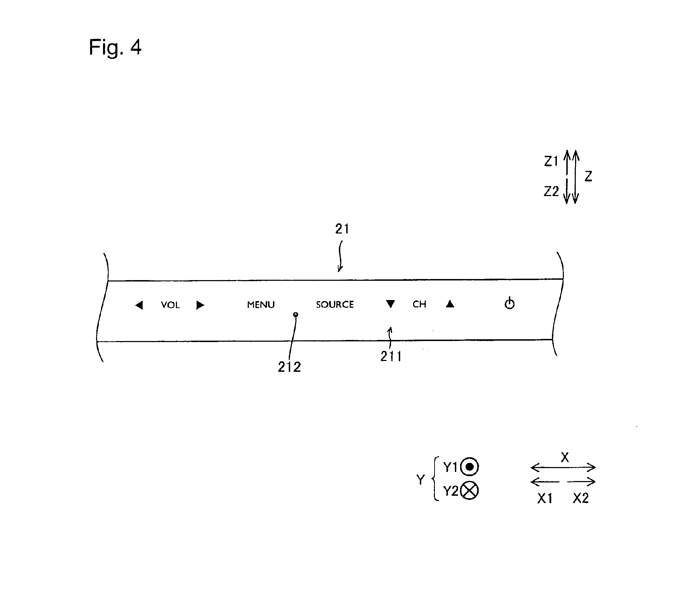

In addition, a panel hole 212 that guides the light irradiated from the LED 312 (described later) to the outside of the television 1 is provided substantially in the central portion of the panel 21 in the X direction as shown in FIG. 4. Furthermore, the panel hole 212 is preferably configured so as to have a smaller inner diameter than the opening edge portion 111a of the light-guiding hole 111 (see FIG. 11) on the outer surface (Y1 direction side) of the front cabinet 11. Moreover, the panel 21 is attached to the front side (Y1 direction side) of the front cabinet 11 such that the panel hole 212 overlaps with the light-guiding hole 111 in the front cabinet 11. In addition, the panel 21 is arranged so as to correspond to the shape of the lower portion of the front cabinet 11. Furthermore, the panel 21 is preferably formed by resin molding. Moreover, the panel 21 is attached to the lower portion of the front cabinet 11 preferably by a double-sided adhesive tape (not illustrated), for example.

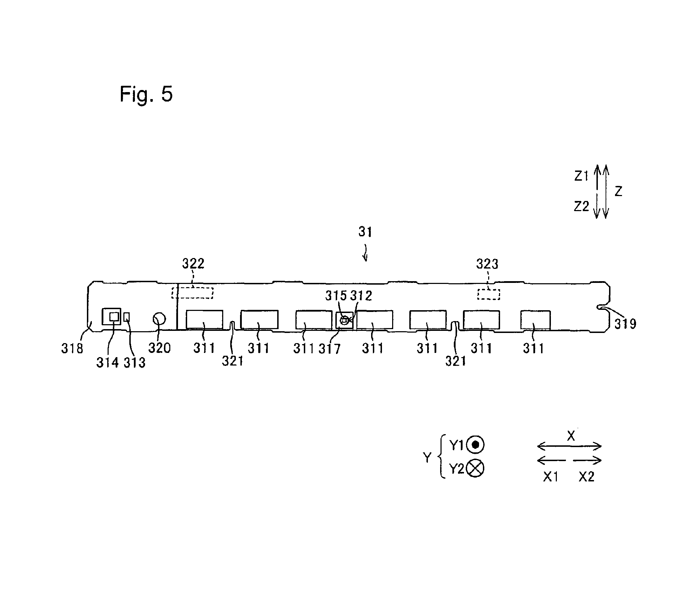

As is shown in FIG. 5, the operating board 31 is provided with the a plurality (for example, seven in this preferred embodiment) capacitance switches 311 that can detect the change in capacitance, an LED 312 that indicates the status of the power of the television 1, an illuminance sensor 313 that detects the brightness of the installation location of the television 1, an IR light-receiver 314 that receives an IR signal emitted from a remote controller, a substantially circular cylindrical-shaped LED installation hole 315 that has the LED 312 installed in the interior thereof, and a ground pattern 317 to drop and prevent static electricity. The capacitance switches 311 are configured so as to detect the operation by the user by detecting the capacitance that changes as a result of the user touching one of the operating members 211 (see FIG. 4) of the panel 21 attached to the front cabinet 11 corresponding to each of the capacitance switches 311.

The seven capacitance switches 311 are respectively disposed at specified intervals in the long-side direction (X direction) of the operating board 31 as shown in FIG. 5. Each of the seven capacitance switches 311 preferably has a substantially rectangular shape. In addition, the capacitance switches 311 and the front-side (Y1 direction-side) surface of the operating board 31 preferably are substantially coplanar. The operating board 31 is attached to the front cabinet 11 such that the capacitance switches 311 are tightly attached to the inner surface of the front cabinet 11. Note that the LED 312 is one example of a "light-emitting element" according to a preferred embodiment of the present invention. Note that the LED installation hole 315 is one example of a "light-emitting element installation hole" according to a preferred embodiment of the present invention.

Furthermore, the LED 312 includes an LED main body 312a and a board attachment member 312b as shown in FIG. 12. The LED 312 is disposed in the interior of the LED installation hole 315. Moreover, the LED 312 is provided in the interior of the LED installation hole 315 of the operating board 31 and disposed at a position farther behind the ground pattern 317 on the operating board 31 as seen from the front (Y1 direction) (see FIG. 12). In addition, the LED 312 is provided in a position that is substantially one half of the thickness of the operating board 31 as seen from an LED exposing hole 315. Furthermore, the board attachment member 312b of the LED 312 is attached to the back side (Y2 direction side) of the operating board 31 by solder 316 (see FIG. 12). Note that the LED main body 312a is one example of a "light-emitting element main body" according to a preferred embodiment of the present invention.

Moreover, the ground pattern 317 preferably made of copper or the like is provided on the opening edge portion 315a (see FIG. 11) on the front side (Y1 direction side) of the LED installation hole 315. The ground pattern 317 is provided on the surface of the operating board 31 in the vicinity of the opening edge portion 315a. The opening edge portion 315a of the LED installation hole 315 toward the front cabinet 11 is provided on the inside of the opening edge portion 111b of the light-guiding hole 111 toward the operating board 31 as seen from the front. The ground pattern 317 is configured so as to be exposed to the interior of the light-guiding hole 111 of the front cabinet 11 as seen from the front of the front cabinet 11 as shown in FIG. 11.

The ground pattern 317 is preferably arranged in a circumferential configuration along the opening edge portion 315a on the front side (Y1 direction side) of the LED installation hole 315 in which the LED 312 is disposed as seen from the front of the front cabinet 11. In addition, the ground pattern 317 is provided so as to circumferentially surround the LED 312 as seen from the front of the front cabinet 11. Furthermore, the ground pattern 317 is provided in a region between the opening edge portion 111b of the light-guiding hole 111 in the front cabinet 11 and the opening edge portion 315a on the front side of the LED installation hole 315 in the operating board 31 (see FIG. 11).

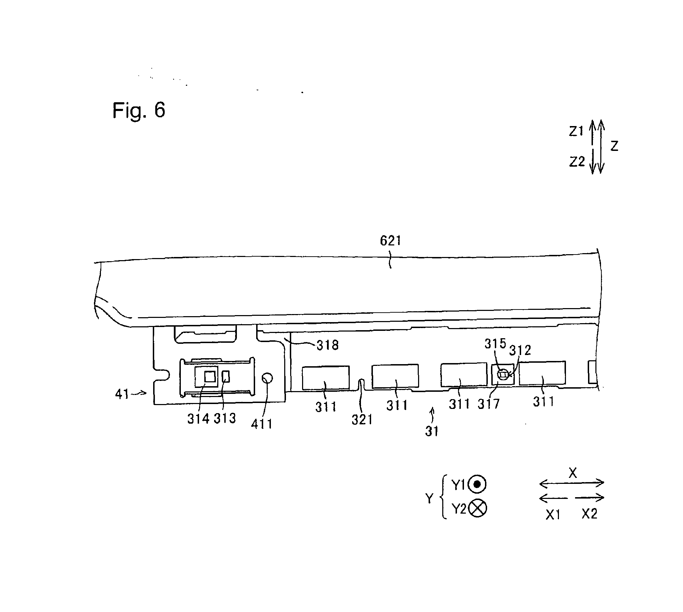

Moreover, as is shown in FIG. 5, a ground pattern 318 preferably made of copper or the like is provided around the illuminance sensor 313 and the IR light-receiver 314 that are provided on the operating board 31. The ground pattern 317 and ground pattern 318 of the operating board 31 have the function of diverting static electricity that has intruded in the periphery of the operating board 31. In addition, the ground pattern 317 and the ground pattern 318 are electrically connected by a wiring pattern (not illustrated). Furthermore, the frame-shaped metal plate 41 to divert static electricity from the ground pattern 318 of the operating board 31 to a rear frame 621 is attached to the upper side (Y1 direction side) of the ground pattern 318 as shown in FIG. 6.

The frame-shaped metal plate 41 is attached to the ground pattern 318 in contact therewith so as to expose the illuminance sensor 313 and the IR light-receiver 314 as shown in FIG. 6. Moreover, the metal plate 41 is provided with a hole 411 that performs the positioning of the metal plate 41. The hole 411 in the metal plate 41 is configured so as to be positioned by engaging with the boss 114 of the front cabinet 11. In addition, the metal plate 41 is configured so as to be connected to the rear frame 621 made of metal. The static electricity dropped onto the ground pattern 318 of the operating board 31 reaches the rear frame 621 having a large surface area via the metal plate 41 and is discharged.

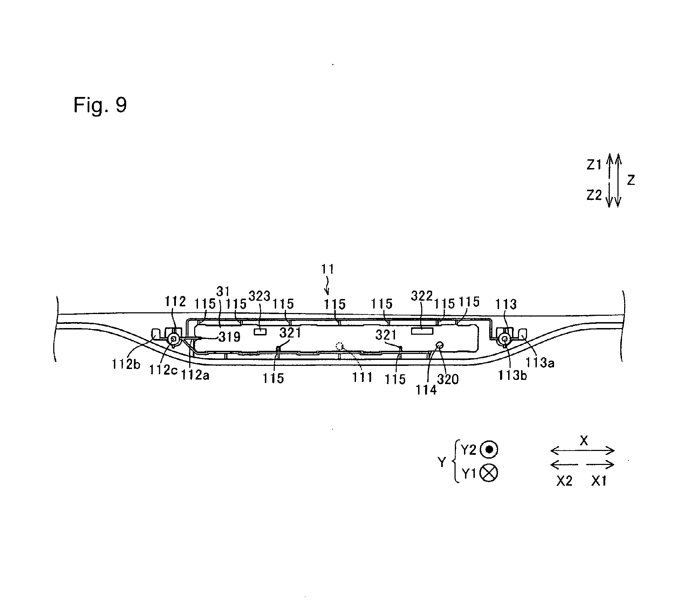

Furthermore, a cutout 319 is provided in the end portion of the operating board 31 in the X2 direction as shown in FIG. 5. A hole 320 to let out the boss 114 (see FIG. 3) used to position the metal plate 41 is provided in the operating board 31 on the X1 direction side thereof. Two cutouts 321 corresponding to the shape of the positioning members 115 (see FIG. 3) of the front cabinet 11 are provided in the short-side direction (Z direction) of the operating board 31. As is shown in FIG. 9, the operating board 31 is configured so as to be positioned on the front cabinet 11 as a result of the cutout 319 being engaged with the positioning member 112a of the front cabinet 11 and as a result of the cutouts 321 and the upper surface side (Z1 direction side) of the operating board 31 being engaged with the positioning members 115 of the front cabinet 11.

Note that a terminal 322 and a terminal 323 are provided on the rear surface of the operating board 31 as shown in FIG. 5. The terminal 322 is connected to the circuit board 63a by wiring (not illustrated). A signal as a change in capacitance that is detected by one of the capacitance switches 311 is transmitted from the terminal 322 to the circuit board 63a via the wiring (not illustrated). Moreover, the terminal 323 is configured so as to be connected to a personal computer when updating firmware that controls the capacitance switches 311 of the operating board 31. In this case, the firmware data transferred from the personal computer to the operating board 31 via the terminal 323 is transferred to the circuit board 63a via the terminal 322 of the operating board 31 and used to update the firmware.

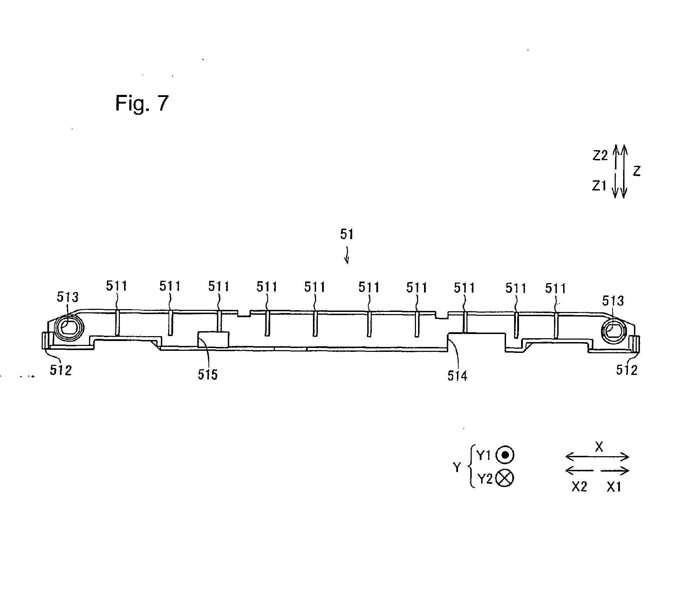

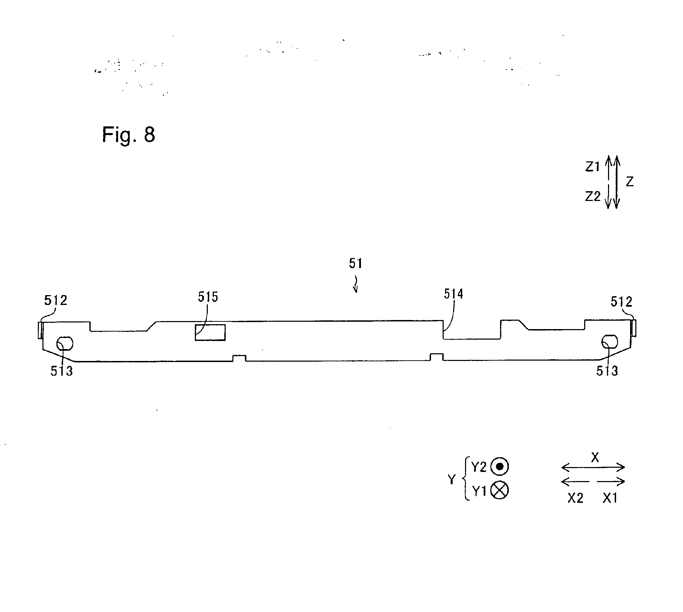

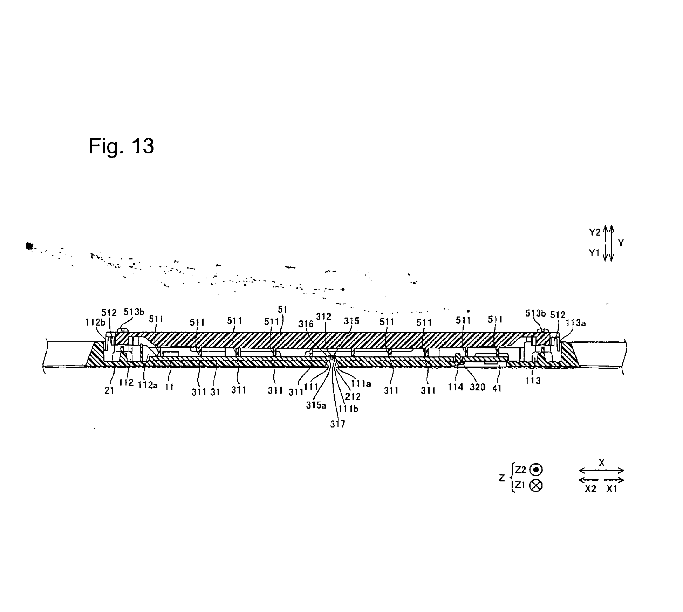

The board fixing member 51 has the function of fixing the operating board 31 to the inner surface of the front cabinet 11. The board fixing member 51 preferably has a horizontally elongated shape that extends along the direction of extension of the operating board 31 in plan view (X direction) as shown in FIGs. 7 and 8. A plurality of ribs 511 are provided on the board fixing member 51 on the inside (Y1 direction side) of the television 1. The individual ribs 511 preferably are arranged so as to respectively have substantially the same height as shown in FIG. 13. In addition, the ribs 511 are preferably formed by resin molding integrally with the board fixing member 51.

As is shown in FIG. 13, the individual ribs 511 are configured so as to respectively press, toward the front cabinet 11 (toward the Y1 direction), the surface of the operating board 31 on the side opposite from the side on which the capacitance switches 311 are provided. Furthermore, the individual ribs 511 are arranged so as to respectively press the positions corresponding to the capacitance switches 311 on the surface of the operating board 31 on the side opposite from the side on which the capacitance switches 311 are provided as shown in FIG. 13. Moreover, as is shown in FIG. 7, the ribs 511 are arranged so as to extend in a direction (Z direction) substantially perpendicular to the direction in which the seven capacitance switches 311 are provided side-by-side (X direction). The ribs 511 are also arranged so as to extend from the end portion on the Z2 direction side of the board fixing member 51 to the position that is substantially one half of the board fixing member 51 in the Z direction.

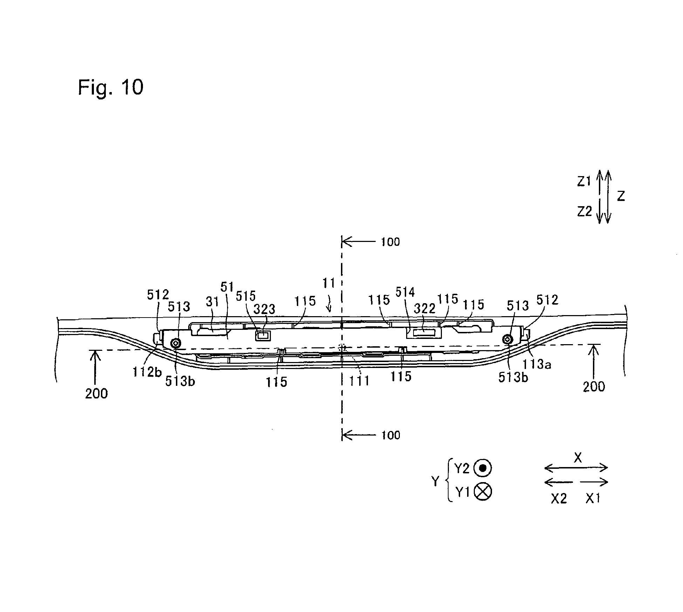

One hook 512 is provided on each of the two end portions of the board fixing member 51 in the X direction as shown in FIGs. 7 and 8. The hooks 512 are provided in order to temporarily fix the board fixing member 51 to the front cabinet 11. The individual hooks 512 are arranged so as to engage with the hook engaging members 112b and 113a (see FIG. 3) respectively provided on the attachment members 112 and 113. In addition, one screw hole 513 is provided in each of the two end portions of the board fixing member 51 in the direction of length (X direction). As is shown in FIG. 10, the individual screw holes 513 are located at positions corresponding to the respective screw holes 112c and 113b (see FIG. 9) in the attachment members 112 and 113 in a state in which the board fixing member 51 is temporarily fixed to the attachment members 112 and 113 by the hooks 512. The board fixing member 51 is configured so as to be fixed to the front cabinet 11 preferably by the screws 513b being inserted via the screw holes 513. Furthermore, a cutout 514 and a hole 515 are provided in the board fixing member 51. The cutout 514 is provided in order to expose the terminal 322 provided on the operating board 31 to the rear side (Y2 direction side) of the television 1. The hole 515 is provided in order to expose the terminal 323 provided on the operating board 31 to the rear side (Y2 direction side) of the television 1.

The display 62 is disposed on the rear side (Y2 direction side) of the front cabinet 11 and fixed to the front cabinet 11 as shown in FIG. 2. Moreover, the display 62 is configured so as to display video of television broadcast on the screen on the front side (Y1 direction side) thereof. In addition, the display 62 has the rear frame 621 on the rear-side (Y2 direction-side) surface. The rear frame 621 is preferably made of metal (made of sheet metal composed of SECC (electrogalvanized steel sheet), for example). Furthermore, the rear frame 621 is provided with screw holes 621a to attach the circuit board 63a for signal processing and the circuit board 63b for power generation, screw holes 621b to attach the stand attachment member 64, and screw holes 621c to attach the cover member 65.

The circuit boards 63a and 63b are disposed on the rear side (Y2 direction side) of the display 62 and fixed to the rear frame 621 of the display 62 as shown in FIG. 2. Moreover, the circuit boards 63a and 63b are attached by the screws 632 being inserted into the screw holes 621a in the rear frame 621 via screw insertion holes 631. In addition, the circuit boards 63a and 63b are each connected to the display 62 by wiring (not illustrated). Furthermore, the circuit board 63a includes a receiver (tuner) 633 which can receive television broadcasts.

The stand attachment member 64 is disposed on the rear side (Y2 direction-side) of the display 62 and fixed to the rear frame 621 of the display 62 as shown in FIG 2. This stand attachment member 64 is provided with screw insertion holes 648a and 648b. Moreover, the stand attachment member 64 is preferably integrally molded from a resin such as polystyrene. The stand attachment member 64 preferably has a standing wall shape that covers the lower side (Z2 direction side) of the circuit boards 63a and 63b attached to the display 62. In addition, the stand attachment member 64 is attached by screws 649 being inserted into the screw holes 621b in the rear frame 621 via the screw insertion holes 648a. The stand attachment member 64 is also attached by screws 652 being inserted into the screw holes 621b in the rear frame 621 via the screw insertion holes 648b.

The cover member 65 is disposed on the rear side (Y2 direction side) of the display 62 and fixed to the rear frame 621 of the display 62 and the front cabinet 11 as shown in FIG. 2. Furthermore, the cover member 65 is arranged such that the upper side (Z1 direction side), the left and right (X direction), and the rear side (Y2 direction side) of the circuit boards 63a and 63b attached to the display 62 are not exposed to the outside. That is, the cover member 65 is configured so as to cover the circuit boards 63a and 63b attached to the display 62 along with the stand attachment member 64. Furthermore, the cover member 65 is arranged so as to cover a portion on the rear side (Y2 direction side) of the rear frame 621 of the display 62. Moreover, the cover member 65 includes screw insertion holes 651. In addition, the cover member 65 is attached by the screws 652 being inserted into the screw holes 621a through 621c of the rear frame 621 via the screw insertion holes 651.

The stand member 71 is configured so as to support the display device main body 61. Furthermore, the stand member 71 is configured so as to be disposed on the lower side (Z2 direction side) of the stand attachment member 64 and attached to the stand attachment member 64 by screws 712 being inserted via screw insertion holes 711 as shown in FIG. 2.

Next, the procedure for attaching the operating board 31 and the board fixing member 51 will be described with reference to FIGs. 9, 10, 12, and 13. First, the operating board 31 is disposed between the two attachment members 112 and 113 provided on the front cabinet 11 and installed on the inside (Y2 direction side) of the front cabinet 11 as shown in FIG. 9. In this case, the operating board 31 is positioned by the cutout 319 in the operating board 31 being engaged with the positioning member 112a of the front cabinet 11, and the operating board 31 is also positioned by the cutouts 321 in the operating board 31 and the upper surface side (Z1 direction side) of the operating board 31 being engaged with the positioning members 115 of the front cabinet 11. In this state, the board fixing member 51 is installed between the two attachment members 112 and 113 provided on the front cabinet 11 from the inside (Y2 direction side) of the front cabinet 11 over the operating board 31 as shown in FIG. 10. Then, the board fixing member 51 is pushed in toward the front side (Y1 direction) of the front cabinet 11, and the two hooks 512 for temporarily fixing the board fixing member 51 are engaged with the hook engaging members 112b and 113a of the front cabinet 11, thus temporarily fixing the board fixing member 51 to the attachment members 112 and 113 of the front cabinet 11. In this state, the screws 513b are used to fix the board fixing member 51 to the attachment members 112 and 113 of the front cabinet 11. Moreover, as is shown in FIGs. 12 and 13, the operating board 31 is installed such that the ground pattern 317 on the operating board 31 is in contact, without any space therebetween, with the opening edge portion 111b of the light-guiding hole 111 in the front cabinet 11 toward the operating board 31.

In the present preferred embodiment, as was described above, by providing the LED 312 attached to the operating board 31 and disposed at a position farther behind the ground pattern 317 on the operating board 31 as seen from the front, static electricity intruding from the light-guiding hole 111 in the front cabinet 11 can be directly dropped (removed) onto the ground pattern 317 that is provided in front of the LED 312 before reaching the LED 312. Consequently, it is possible to prevent static electricity from reaching the LED 312 used as the light source without providing any member exclusively as a countermeasure against static electricity, other than the operating board 31 that includes the ground pattern 317.

In the present preferred embodiment, as was described above, by providing the ground pattern 317 on the surface of the operating board 31 so as to be exposed to the interior of the light-guiding hole 111 in the front cabinet 11 as seen from the front, it is possible to easily drop (remove) static electricity intruding via the light-guiding hole 111 directly onto the ground pattern 317.

In the present preferred embodiment, as was described above, as a result of the ground pattern 317 that is exposed to the interior of the light-guiding hole 111 in the front cabinet 11 being arranged on the surface of the operating board 31 so as to surround the LED 312 in a circumferential shape as seen from the front, even if static electricity should intrude from any direction around the LED 312, the static electricity can be dropped (removed) by the ground pattern 317 that is arranged so as to circumferentially surround the LED 312, so it is possible to effectively prevent the static electricity from reaching the LED 312 used as the light source.

In the present preferred embodiment, as was described above, by attaching the operating board 31 to the front cabinet 11 such that the ground pattern 317 on the operating board 31 is in contact with the opening edge portion 111b of the light-guiding hole 111 in the front cabinet 11 toward the operating board 31 without any space therebetween, static electricity is prevented from intruding into the interior of the television 1 from the space between the ground pattern 317 on the operating board 31 and the opening edge portion 111b of the light-guiding hole 111 in the front cabinet 11 toward the operating board 31, so it is possible to prevent static electricity from reaching the LED 312 more effectively.

In the present preferred embodiment, as was described above, the LED installation hole 315 where the LED 312 is disposed is provided in the operating board 31, the ground pattern 317 is arranged on the surface of the LED installation hole 315 in the vicinity of the opening edge portion 315a in a circumferential configuration along the opening edge portion 315a of the LED installation hole 315, and the LED 312 is disposed in the interior of the LED installation hole 315 of the operating board 31 and in a position farther behind the ground pattern 317 on the operating board 31 as seen from the front. As a result, it is possible to dispose the LED 312 easily in a position farther behind the ground pattern 317 merely by disposing the LED 312 in the interior of the LED installation hole 315 that is provided with the ground pattern 317 in a circumferential configuration along the opening edge portion 315a.

In the present preferred embodiment, as was described above, as a result of the opening edge portion 315a of the LED installation hole 315 toward the front cabinet 11 being provided on the inside of the opening edge portion 111b of the light-guiding hole 111 toward the operating board 31 as seen from the front, and as a result of the ground pattern 317 being provided on the surface of the operating board 31 in a region between the opening edge portion 315a of the LED installation hole 315 toward the front cabinet 11 and the opening edge portion 111b of the light-guiding hole 111 toward the operating board 31, the ground pattern 317 arranged in a circumferential configuration along the opening edge portion 315a of the LED installation hole 315 in the operating board 31 can be formed easily in an exposed manner by utilizing the difference in the size of the opening edge portions between the opening edge portion 111b of the light-guiding hole 111 toward the operating board 31 and the opening edge portion 315a of the LED installation hole 315 toward the front cabinet 11.

In the present preferred embodiment, as was described above, the LED 312 preferably includes the LED main body 312a and the board attachment member 312b, and the board attachment member 312b of the LED 312 is attached to the surface of the operating board 31 on the side opposite from the front cabinet 11 in a state in which the LED main body 312a is disposed in the LED installation hole 315. Consequently, the LED 312 can be disposed easily in the interior of the LED installation hole 315 in the operating board 31 and in a position farther behind the ground pattern 317 on the operating board 31 merely by attaching the board attachment member 312b of the LED 312 to the surface of the operating board 31 on the side opposite from the front cabinet 11.

In the present preferred embodiment, as was described above, the light-guiding hole 111 in the front cabinet 11 preferably has a substantially circular truncated cone shape, the smaller opening edge portion 111b of the substantially circular truncated cone-shaped light-guiding hole 111 contacts the operating board 31, and the ground pattern 317 on the operating board 31 is exposed on the inside of the smaller opening edge portion 111b of the substantially circular truncated cone-shaped light-guiding hole 111. Consequently, the light-guiding hole 111 which becomes a static electricity intrusion path becomes gradually smaller along the direction of intrusion of static electricity, so it is possible to narrow down the region where static electricity reaches. As a result, it is possible to drop and prevent static electricity efficiently even with the small ground pattern 317.

In the present preferred embodiment, as was described above, the front cabinet 11 preferably includes the panel 21 formed with the panel hole 212 including the opening edge portion with a smaller inner diameter than the opening edge portion 111a of the light-guiding hole 111 toward the outer surface of the front cabinet 11, and the panel 21 is attached to the front side of the front cabinet 11 such that the panel hole 212 overlaps with the light-guiding hole 111 in the front cabinet 11. If such a configuration is adopted, even in cases where the panel 21 is attached to the front side of the front cabinet 11 in a positionally shifted state, the panel hole 212 and the light-guiding hole 111 can be readily disposed in mutually overlapping positions, so it is possible to emit light to the outside easily via the panel hole 212.

In the present preferred embodiment, as was described above, the rear frame 621 preferably made of metal is provided on the rear side of the display 62, and the ground pattern 317 is electrically connected to the rear frame 612. As a result, it is possible to prevent static electricity from remaining on the operating board 31 by diverting the static electricity dropped onto the ground pattern 317 of the operating board 31 to the rear frame 612 that has a large surface area.

In the present preferred embodiment, as was described above, by providing the plurality of capacitance switches 311 in the vicinity of the LED 312 disposed on the operating board 31 and providing the light-guiding hole 111 in a position of the front cabinet 11 that allows the LED 312 and the ground pattern 317 to be exposed and does not allow the capacitance switches 311 to be exposed as seen from the front, static electricity intruding via the light-guiding hole 111 is dropped onto the ground pattern 317 even when the capacitance switches 311 are provided in the vicinity of the LED 312 disposed on the operating board 31, so it is possible to prevent the static electricity from directly reaching the capacitance switches 311. Thus, in the present preferred embodiment, it is possible to inhibit static electricity from reaching the LED 312 and the capacitance switches 311 without providing a ground plate or the like in front of the operating board 31, so the capacitance switches 311 can be in direct contact with the inner surface of the front cabinet 11. As a result, it is possible to operate the capacitance switches 311 in a proper manner.

Note that the preferred embodiments disclosed herein merely constitute examples in all respects and should be considered to be non-restrictive. The scope of the present invention is indicated not by the description of the aforementioned preferred embodiments, but rather by the scope of the patent claims, and includes all modifications with an equivalent meaning to the scope of the patent claims and within the scope of the patent claims.

For instance, in the aforementioned preferred embodiments, an example was shown in which the present invention was applied to a television, but the present invention is not limited to this. The present invention may also be applied to display devices other than televisions. For example, the present invention may be applied to a display or the like for a PC (personal computer).

Furthermore, in the aforementioned preferred embodiments, an example was shown in which the LED as the light-emitting element of the present invention was provided in a position that is substantially one half of the thickness of the operating board as seen from the front side, but the present invention is not limited to this. In the present invention, the light-emitting element may also be provided in a position other than a position that is substantially one half of the thickness of the board as long as it is a position farther behind the ground pattern.

Moreover, in the aforementioned preferred embodiments, an example was shown in which the LED as the light-emitting element of the present invention was provided in the interior of the LED installation hole as the light-emitting element installation hole of the present invention, but the present invention is not limited to this. In the present invention, the light-emitting element may also be provided in the interior of a cutout as long as it is in a position farther behind the ground pattern.

In addition, in the aforementioned preferred embodiments, an example was shown in which the board attachment member of the light-emitting element of the present invention was attached to the operating board by soldering, but the present invention is not limited to this. In the present invention, the board attachment member may also be attached to the board, for example, by an adhesive or the like other than by soldering.

Furthermore, in the aforementioned preferred embodiments, an example was shown in which the operating board was fixed to the front cabinet by the board fixing member, but the present invention is not limited to this. The board may also be fixed to the front case, for example, by a double-sided tape or the like other than by the board fixing member.

Moreover, in the aforementioned preferred embodiments, an example was shown in which the light-guiding hole was formed in a substantially circular truncated cone shape, but the present invention is not limited to this. In the present invention, the light-guiding hole may also be formed in a shape other than a circular truncated cone shape. In this case, a shape formed to be tapered toward the back is preferable. With such a configuration, the light-guiding hole that becomes an intrusion path for static electricity becomes gradually smaller along the direction of intrusion of the static electricity, so it is possible to narrow down the region where static electricity reaches. As a result, it is possible to efficiently drop static electricity even with a small ground pattern.

In addition, in the aforementioned preferred embodiments, an example was shown in which the capacitance switches were provided on the operating board, but the present invention is not limited to this. In the present invention, electronic components other than the capacitance switches may also be provided on the operating board.

Furthermore, in the aforementioned preferred embodiments, an example was shown in which the operating members corresponding to the capacitance switches were provided on the panel attached to the front cabinet, but the present invention is not limited to this. In the present invention, it is also possible to provide the operating members corresponding to the capacitance switches directly on the front case without providing the panel.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A display device comprising:
a frame-shaped front case that includes a light-guiding hole to guide light from a light source to outside;
a display including a display region that is disposed so as to be exposed from the frame-shaped front case;
a board that is attached to an inner surface of the frame-shaped front case and that includes a ground pattern on a surface thereof on a side of the inner surface of the frame-shaped front case; and
a light-emitting element defining the light source that is attached to the board and that is disposed at a position farther behind the ground pattern of the board as seen from the front of the display device.

2. The display device according to claim 1, wherein the ground pattern is arranged on the surface of the board so as to be exposed to an interior of the light-guiding hole of the frame-shaped front case as seen from the front of the display device.

3. The display device according to claim 2, wherein the ground pattern exposed to the interior of the light-guiding hole of the frame-shaped front case is arranged on the surface of the board so as to surround a circumference of the light-emitting element seen from the front of the display device.

4. The display device according to claim 1, wherein the board is attached to the frame-shaped front case such that the ground pattern on the board is in contact with the opening edge portion of the light-guiding hole in the frame-shaped front case toward the board without any space therebetween.

5. The display device according to claim 1, wherein
the board includes a light-emitting element installation hole where the light-emitting element is disposed;
the ground pattern is provided on the surface of the board at an area of an opening edge portion of the light-emitting element installation hole in a circumferential configuration along the opening edge portion of the light-emitting element installation hole; and
the light-emitting element is disposed in an interior of the light-emitting element installation hole of the board and at a position farther behind the ground pattern on the board as seen from the front of the display device.

6. The display device according to claim 5, wherein the opening edge portion of the light-emitting element installation hole toward the frame-shaped front case is provided on an inside of the opening edge portion of the light-guiding hole toward the board as seen from the front of the display device; and
the ground pattern is provided on the surface of the board in a region between the opening edge portion of the light-emitting element installation hole toward the frame-shaped front case and an opening edge portion of the light-guiding hole toward the board.

7. The display device according to claim 5, wherein
the light-emitting element includes a light-emitting element main body and a board attachment member; and
the board attachment member of the light-emitting element is attached to the surface of the board on a side opposite from the frame-shaped front case in a state in which the light-emitting element main body is disposed in the light-emitting element installation hole.

8. The display device according to claim 1, wherein
the light-guiding hole in the frame-shaped front case has a substantially circular truncated cone shape;
a smaller opening edge portion of the substantially circular truncated cone-shaped light-guiding hole contacts the board, and the ground pattern on the board is exposed on an inside of the smaller opening edge portion of the substantially circular truncated cone-shaped light-guiding hole.

9. The display device according to claim 1, wherein
the frame-shaped front case includes a panel including a panel hole that has an opening edge portion with a smaller inner diameter than an opening edge portion of the light-guiding hole in the frame-shaped front case toward the outer surface thereof; and
the panel is attached to a front side of the frame-shaped front case such that the panel hole overlaps with the light-guiding hole in the frame-shaped front case.

10. The display device according to claim 1, wherein
a rear frame made of metal is provided on a rear side of the display; and
the ground pattern is electrically connected to the rear frame.

11. The display device according to claim 1, wherein
a plurality of capacitance switches are provided adjacent to the light-emitting element disposed on the board; and
the light-guiding hole is provided in a position of the frame-shaped front case from which the light-emitting element and the ground pattern are exposed and from which the capacitance switches are not exposed as seen from the front of the display device.

12. A television comprising:
a receiver arranged to receive television broadcasts;
a frame-shaped front case that includes a light-guiding hole to guide light from a light source to outside;
a display including a display region that is exposed from the frame-shaped front case;
a board that is attached to an inner surface of the frame-shaped front case and that includes a ground pattern on a surface thereof on a side of the inner surface of the frame-shaped front case; and
a light-emitting element defining the light source that is attached to the board and that is disposed at a position farther behind the ground pattern of the board as seen from the front of the television.
